# EUROPÄISCHE PATENTSCHRIFT

(11) **EP 3 902 073 B1**
(45) Veröffentlichungstag und Bekanntmachung des Hinweises auf die Patenterteilung: **25.02.2026**
(21) Anmeldenummer: 20170949.0
(22) Anmeldetag: 22.04.2020
(51) Int. Cl.: H02G 3/06, H02G 3/04

(54) **VERFAHREN ZUM VERBINDEN VON KABELBAHNABSCHNITTEN UND KABELBAHN**
CABLE TRAY AND METHOD FOR CONNECTING CABLE TRAY SECTIONS
PROCÉDÉ DE RACCORDEMENT DES SECTIONS DE CHEMIN DE CÂBLES ET CHEMIN DE CÂBLES

(43) Veröffentlichungstag der Anmeldung: 27.10.2021
(73) Patentinhaber: ZURECON AG, 4702 Oensingen (CH)
(72) Erfinder: PFLUGER, Gerd, 4625 Oberbuchsiten (CH)
(74) Vertreter: Rutz & Partner

(56) Entgegenhaltungen:
- EP-A1- 0 083 809
- EP-A1- 2 709 221
- EP-A1- 2 975 711
- DE-A1- 102014 019 211
- DE-A1- 19 841 643
- DE-A1- 3 737 187
- DE-U1- 8 901 613
- KR-A- 20170 124 374
- US-A1- 2015 260 935

## Beschreibung

Die Erfindung betrifft ein Verfahren zum Verbinden von Kabelbahnabschnitten sowie eine Kabelbahn mit Kabelbahnabschnitten, die gemäss dem erfindungsgemässen Verfahren miteinander verbunden wurden.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität oft in metallene Kabelbahnen, wie Kabelkanäle oder Kabelpritschen, eingelegt und so z.B. von einem Schaltfeld oder einer Zentrale zu den Verbrauchern geführt. Kabelbahnen dieser Art, die aus einzelnen Kabelbahnabschnitten zusammengesetzt werden, sind z.B. aus dem [1] Produktkatalog der LANZ OENSINGEN AG, Juli 2017, bekannt. Zur Verbindung der Kabelbahnabschnitte sind Vorrichtungen verwendbar, die ebenfalls in diesem Produktekatalog beschrieben sind.

Aus [2], EP1049226A2, ist eine Verbindungsvorrichtung bekannt, mittels der stirnseitig aneinander anstossende und mit Wandöffnungen versehene Seitenwände benachbarter Kabelbahnabschnitte miteinander verbindbar sind. Die Verbindungsvorrichtung umfasst Verbindungsplatten, die an der Unterseite mit Haken versehen sind. Zur Installation der Verbindungsplatten an den Aussenseiten der Seitenwände werden die Haken von oben in die Wandöffnungen eingeführt und nach unten gegen den Boden des Kabelkanals geschoben. In der Folge werden die Verbindungsplatten anhand eines Sicherungsmittels fixiert, das drehbar oder verschiebbar mit der Verbindungsplatte verbunden ist und in den Abschlussrand der Seitenwand eingehängt wird. Mit dem Sicherungsmittel werden somit Gelenk-, Scharnier- oder Schieberfunktionen realisiert, weshalb feingliederige Vorrichtungsteile erforderlich sind, die erheblichen Belastungen standhalten müssen. Diese Vorrichtung ist relativ aufwendig ausgestaltet und erfordert einen entsprechenden Montageaufwand.

Aus [3], DE19841643A1, ist eine Verbindungsvorrichtung für eine Kabelbahn bekannt, die aus einem im Querschnitt etwa U-förmigen Blechteil besteht, dessen erstes Ende gering verkröpfte Seiten- und Bodenwandungen aufweist, so dass ein weiteres Blechteil mit seinem unverkröpften zweiten Ende in das verkröpfte erste Ende des ersten Blechteils einsetzbar und in dieser Soll-Lage fixierbar ist. An den Seitenwandungen des einen Endes sind Rast- und Riegelausnehmungen ausgebildet, und an den Seitenwandungen des anderen Endes sind dazu passende Rasten und Riegel ausgebildet, so dass die beiden Kabelbahnabschnitte quer zu ihrem Längsverlauf ineinander drückbar und miteinander verbindbar sind. Die Kabelbahnabschnitte dieser Kabelbahn sind daher asymmetrisch als Steckverbinder ausgestaltet. Die Verbindungsvorrichtung ist somit in die Kabelbahn integriert, weshalb die Kabelbahn Teil der Verbindungsvorrichtung und hinsichtlich der Ausgestaltung entsprechend definiert ist. Dadurch resultieren unerwünschte Einschränkungen der Gestaltungsmöglichkeiten der Kabelbahn. Zudem resultiert ein erhöhter Fertigungsaufwand für die Kabelbahnabschnitte mit den darin integrierten Teilen der Verbindungsvorrichtung. Ein oft wünschbares Zuschneiden der Kabelbahnabschnitte vor Ort ist nicht möglich, weshalb ein idealer Verlauf der Kabelbahn gegebenenfalls nicht realisiert werden kann.

Aus [4], EP2869417A1, offenbart eine Verbindungsvorrichtung mit zwei miteinander koppelbaren Verbindungsplatten, die gegeneinander gerichtete Haken aufweisen, die in Wandöffnungen von Kabelbahnabschnitten eingreifen können. Die Verbindungsplatten können in stirnseitig aneinander anstossende Endstücke von Kabelbahnen eingehängt und miteinander gekoppelt werden, um die benachbarten Kabelbahnen miteinander zu verbinden. Dazu weist die erste Verbindungsplatte ein massives C-Profil-förmiges Aufnahmeprofil mit gegeneinander gerichteten Abschlussplatten auf, in die eine Arretierschraube eingedreht ist, um die Verbindungsplatten zu fixieren. Diese Verbindungsvorrichtung ist relativ aufwendig ausgestaltet und nicht leicht handhabbar. Das Aufnahmeprofil erfordert zudem entsprechend grosse Abmessungen. Bei der Verbindung der Verbindungsplatten durch Schrauben besteht das Problem, dass sich diese voneinander lösen können.

Zu beachten ist ferner, dass durch die beschriebenen Verbindungsvorrichtungen oft keine zufriedenstellende elektrische Verbindung resultiert, weshalb elektrische Ladungen nur ungenügend abgeleitet werden, was zu unerwünschten Einwirkungen auf die eingelegten Kabel haben kann.

Die DE3737187A1 offenbart eine winkelförmige Lasche mit einem ersten Schenkel, der in Seitenwände von stirnseitig aneinander liegenden Kabelkanälen eingehängt und gegen diese gedreht werden kann, bis vorspringende Abschnitte eines zweiten Schenkels in Löcher in den Böden der zu verbindenden Kabelkanäle einrasten.

Die EP0083809A1 offenbart Kabelkanäle mit Seitenwänden, die ein integriertes Befestigungsteil umfassen, und einem Bodenelement, das ein Anschlagelement aufweist, das in einem bestimmten Abstand von einer Seitenwand derart angeordnet ist, dass ein Hilfselement zwischen dem genannten Anschlagelement und dem Befestigungsmittel angebracht werden kann.

Die EP2975711A1 betrifft einen Installationskanal mit zwei Kanalsegmenten, die miteinander verbunden sind.

Die DE102014019211A1 offenbart ein Verfahren zum Herstellen einer Fügeverbindung, bei dem mittels eines Roboters, an welchem ein Werkzeug angeordnet ist, die Fügeverbindung durch Umformen hergestellt wird.

Der vorliegenden Erfindung liegt daher die Aufgabe zugrunde, ein Verfahren zum Verbinden von Kabelbahnabschnitten sowie eine Kabelbahn mit Kabelbahnabschnitten anzugeben, die gemäss dem erfindungsgemässen Verfahren miteinander verbunden wurden.

Mittels des erfindungsgemässen Verfahrens sollen Kabelbahnabschnitte mit minimalem Aufwand an Material und Arbeit zuverlässig miteinander verbunden werden können.

Geschraubte Verbindungen, bei denen die Gefahr des selbsttätigen Lösens z.B. bei Krafteinwirkungen oder Vibrationen, besteht, sollen vermieden werden.

Die eingesetzte Verbindungsvorrichtung soll praktisch keinen Raum in Anspruch nehmen und keine Vorrichtungsteile aufweisen, die beim Einlegen von Kabel störend in Erscheinung treten oder dieses gar beschädigen könnten.

Die Kabelbahnabschnitte sollen ohne zusätzlichen Fertigungsaufwand bereitgestellt werden können. Insbesondere sollen an den Kabelbahn enden keine Verbindungsteile erforderlich sein.

Kabelbahnabschnitte sollen auch am Installationsort auf eine gewünschte Länge zugeschnitten und anschliessend miteinander verbunden werden können.

Die Verbindung zwischen den Kabelbahnabschnitten soll stabil sein und langfristig eine gute mechanische und eine hochwertige elektrische Verbindung gewährleisten.

Die Verbindungsvorrichtung soll zudem bei Kabelbahnen aller Art, wie Kapelpritschen, Kabelleitern, Kabelkanälen und dergleichen, verwendbar sein, die gelochte oder ungelochte Platten, wie Seitenwände oder Bodenplatten aufweisen.

Diese Aufgabe wird mit einem Verfahren zur Verbindung von Kabelbahnabschnitten und einer damit hergestellten Kabelbahn gelöst, welche die in Anspruch 1 bzw. 12 angegebenen Merkmale aufweisen. Vorteilhafte Ausgestaltungen der Erfindung sind in weiteren Ansprüchen angegeben.

Das Verfahren dient der Verbindung von Kabelbahnabschnitten, die je wenigstens ein erstes bzw. zweites Bodenelement und beidseits daran anschliessende gegebenenfalls mit Lochungen versehene Seitenwände umfassen und die nach deren Verbindung eine Kabelbahn bilden, wobei eine Verbindungsvorrichtung vorgesehen wird, die eine metallene Verbindungsplatte umfasst, und ein Haltemittel vorgesehen wird, mittels dessen die Verbindungsplatte mit zueinander korrespondierenden und stirnseitig aneinander anliegenden Seitenwänden der Kabelbahnabschnitte verbunden wird.

Erfindungsgemäss wird die Verbindungsplatte in einem ersten Arbeitsschritt anhand des Haltemittels formschlüssig und/oder kraftschlüssig mit den zueinander korrespondierenden Seitenwänden der Kabelbahnabschnitte verbunden. Anschliessend werden die Verbindungsplatte und die Seitenwände der beiden Kabelbahnabschnitte in einem zweiten Arbeitsschritt je an wenigstens einer Stelle ineinander verformt und formschlüssig ineinander gefügt.

Der Vorgang zur Verbindung der Kabelbahnabschnitte kann daher in wenigen Arbeitsschritten, die einfach auszuführen sind, erfolgen. Die Verbindungsvorrichtung kann bei Kabelbahnen aller Art, wie Kabelpritschen, Kabelleitern, Kabelkanälen und dergleichen, verwendbar sein, die gelochte oder ungelochte Seitenwände aufweisen.

Nachdem die Kabelbahnabschnitte axial ausgerichtet und stirnseitig gegeneinander geführt wurden, werden sie im ersten Arbeitsschritt durch die metallene Verbindungsplatte miteinander verbunden. Sofern es die konkreten Umstände zulassen bzw. der Anwender dies wünscht, kann die Verbindungsplatte auf der Innenseite oder der Aussenseite der Seitenwände angeordnet werden.

Primäres Ziel des ersten Arbeitsschritts ist es, die Verbindungsplatte an einer gewünschten Stelle zu positionieren und zu halten, an der die Verbindungsplatte vorzugsweise mit der ersten Hälfte die erste Seitenwand und vorzugsweise mit der zweiten Hälfte die zweite Seitenwand endseitig teilweise überdeckt. Die Höhe der Verbindungsplatte kann der Höhe der Seitenwände entsprechen oder einen Bruchteil davon betragen. Wesentlich ist, dass die Verbindungsplatte Teile der Seitenwände überdeckt, an denen die Verbindungsplatte durch Fügeverbindungen, wie Clinch-Verbindungen oder Tox-Verbindungen, im zweiten Arbeitsschritt formschlüssig mit den Seitenwänden verbunden werden soll.

Durch Wahl entsprechender Haltemittel kann bereits im ersten Arbeitsschritt eine Verbindung erzielt werden, bei der die miteinander verbundenen, aber noch nicht mit Kabel belasteten Kabelbahnabschnitte auch unter Einwirkung von möglicherweise auftretenden Kräften in Position und/oder axial ausgerichtet gehalten werden.

Durch mechanische Verbindungsmittel oder durch geeignete Klebstoffe als Haltemittel kann z.B. sichergestellt werden, dass die Kabelbahnabschnitte nicht mehr auseinandergezogen werden können.

Haltemittel, wie sie nachstehend beschrieben sind, können für sich alleine oder auch in allen möglichen Kombinationen eingesetzt werden.

In einer vorzugsweisen Ausgestaltung wird vorgesehen, dass die Verbindungsplatte und die Seitenwände im ersten Arbeitsschritt mittels eines Klebstoffs oder Klebstoffelements miteinander verklebt werden. Der Klebstoff oder das Klebstoffelement kann dabei zuerst auf die Verbindungsplatte oder zuerst auf die Seitenwände aufgetragen werden.

Vorzugsweise werden die Verbindungsplatte und die Seitenwände im ersten Arbeitsschritt durch ein doppelseitig klebendes Klebeband, miteinander verbunden werden, wobei das Klebeband zuerst auf die Verbindungsplatte oder zuerst auf die Seitenwände aufgetragen wird. Beispielsweise werden 3M^{™} VHB^{™} Klebebänder der Firma 3M verwendet.

Bei der Verwendung eines doppelseitig klebenden Klebebands, das einen flächigen Klebstoffkörper umfasst, wird dieser mit seiner ersten Klebstoffseite vorzugsweise an der Verbindungsplatte festgeklebt. Die zweite Klebstoffseite ist mit einer Schutzfolie abgedeckt, die am Installationsort entfernt wird. Die Verbindungsplatte kann daher am Installationsort von der Schutzfolie befreit und mit den Seitenwänden der Kabelbahnabschnitte verbunden werden. Die entsprechenden Verbindungsplatten können daher mit wenigen Handgriffen montiert werden. Nach dem Festkleben der Verbindungsplatten ist eine kraftschlüssige Verbindung erstellt.

In einer weiteren vorzugsweisen Ausgestaltung ist vorgesehen, dass die Verbindungsplatte beidseitig mit als Haltemittel dienenden Halteelementen versehen ist, die bei der Montage der Verbindungsplatte mit den Seitenwänden formschlüssig verbunden werden. Beispielsweise sind beidseitig an der Verbindungsplatte Halteelemente als Haken ausgebildet, die in zugeordnete Lochungen der Seitenwände eingehängt werden. Die Halteelemente sind vorzugsweise aus der Verbindungsplatte ausgeschnitten und ausgeformt.

Die Halteelemente sind vorzugsweise in einem Abstand zueinander angeordnet, der gegebenenfalls dem Rasterabstand der Lochungen der Seitenwände entspricht, die vorzugsweise Längslochungen sind, die sich parallel zur Längsachse der Seitenwände erstrecken. Sofern die Seitenwände Längslochungen aufweisen, können mit Haken oder dergleichen versehene Verbindungsplatten einfach in die Seitenwände eingehängt werden. Mittels der montierten Verbindungsplatten werden die Kabelbahnabschnitte bereits im ersten Arbeitsschritt formschlüssig miteinander verbunden.

Alternativ wird vorgesehen, dass die Verbindungsplatte durchgehend mit einem als Haltemittel dienenden Halteelement bzw. Abschlussteil versehen ist, das mit den Seitenwänden oder mit einem an die Seitenwände anschliessenden Wandabschluss formschlüssig verbunden wird. Das durchgehende Halteelement ist vorzugsweise als durchgehende Krümmung, Rollung oder Faltung an der Oberseite der Verbindungsplatte vorgesehen, die in den Wandabschluss der Seitenwände eingedreht oder eingehängt wird. Sofern die Seitenwände mit einem entsprechenden, z.B. nach innen oder aussen gerollten Wandabschluss versehen sind, kann die Verbindungsplatte besonders einfach montiert werden. Die Verbindungsplatte kann mit dem Abschlussteil in den Wandabschluss eingehängt und gegen die Seitenwand gedreht werden. Der Wandabschluss der Seitenwände und das Abschlussteil der Verbindungsplatte sind anschliessend koaxial zueinander ausgerichtet gehalten. Wie oben beschrieben, kann die Verbindungsplatte zusätzlich mit Klebstoff oder einem Klebstoffkörper versehen sein, sodass sie gegen die Seitenwand gedreht werden kann und anschliessend formschlüssig durch das Abschlussteil und kraftschlüssig durch den Klebstoff gehalten wird. Auch bei dieser Art der Montage kann die Verbindungsplatte mit wenigen Handgriffen montiert werden.

In weiteren vorzugsweisen Ausgestaltungen kann die als Haltemittel wenigstens ein magnetisches Element vorgesehen werden, das in die Verbindungsplatte integriert ist oder das mit der Verbindungsplatte permanent verbunden ist oder temporär verbunden wird. Sofern die zu verbindenden Kabelbahnabschnitte stabil gehalten werden, kann die Verbindungsplatte besonders einfach montiert werden, indem sie an der Verbindungsstelle angelegt wird. Die magnetische oder mit Magneten versehene Verbindungsplatte kann mit den beschriebenen mechanischen oder chemischen Haltemitteln kombiniert oder auch alleine eingesetzt werden.

Die Verbindungsplatte kann daher im ersten Arbeitsschritt auf verschiedene Arten vorteilhaft mit den zueinander korrespondierenden Seitenwänden der Kabelbahnabschnitte verbunden werden. Erfindungsgemäß führt der zweite Arbeitsschritt mittels eines Fügewerkzeugs durch, ohne dass die Verbindungsplatte gehalten werden muss.

Nach Vollzug des ersten Arbeitsschritts hat der Installateur beide Hände frei und kann das Fügewerkzeug ergreifen und mit diesem die Fügeverbindungen erstellen. Dabei wird die Verbindungsplatte sowohl mit der Seitenwand des ersten Kabelbahnabschnitts als auch mit der Seitenwand des zweiten Kabelbahnabschnitts durch wenigstens je eine Fügeverbindung verbunden.

Das Toxen oder Clinchen bzw. Durchsetzfügen nach DIN8593 welches für die Erstellung der Fügeverbindungen eingesetzt wird, ist eine einfach zu realisierende Verbindungstechnik ohne zusätzliche Fügeelemente. Bei Durchführung des Tox- oder Clinch-Prozesses wird in einem Kaltumformprozess eine druckknopfartige, formschlüssige Verbindung zwischen der Verbindungsplatte und den Seitenwänden erstellt, die als Blechlagen aneinander liegen.

Beim Toxen oder Clinchen drückt ein Stempel die zu verbindenden Bleche in eine Matrize. Die Verbindung der Blechschichten wird durch lokale Umformung hergestellt, die durch die Relativbewegung der Fügewerkzeuge Stempel und Matrizen erzeugt wird. Durch die Stempelbewegung verschiebt sich das Blechmaterial teilweise aus der Trennebene heraus und es kommt zum Durchsetzen. Anschliessend wird der Werkstoff gestaucht und es kommt zum Querfliesspressen und zu einer nicht lösbaren kraft-formschlüssigen Verbindung zwischen den Blechschichten.

Der durch die plastische Verformung erzeugte Hinterschnitt sorgt für hohe Haltekräfte im Halsbereich. Zusätzlich entsteht auch ein Materialschluss, der optimal elektrisch leitend ist. Im Vergleich zu Schnappverbindungen, mittels denen Kabelbahnabschnitte miteinander verbunden werden und bei denen gegebenenfalls verschmutzte oder korrodierte Kontaktzungen federelastisch einander anliegen und nur eine ungenügende elektrische Verbindung erstellen, erfolgt während des Clinch-Vorgangs in der Fügezone neben dem Form- und Kraftschluss auch ein partieller Stoffschluss, bei dem die gefugten Bleche ineinander fliessen so, dass durch eine Vielzahl an Mikrokontakten eine optimal leitfähige Verbindung mit geringstem Übergangswiderstand entsteht. Die elektrisch leitende Kontaktzone ist innerhalb der Fügeverbindung eingeschlossen und auch langfristig gegen Korrosion geschützt. Die optimale Leitfähigkeit durch Stoffschluss ist daher über die gesamte Betriebszeit gewährleistet. Die resultierende Kabelbahn mit der eingefügten Verbindungsplatte bildet somit praktisch einen einheitlichen elektrischen Leiter ohne Übergangskontakte, die den Stromfluss behindern.

Weiche Beschichtungen, wie beispielsweise Zinnschichten auf Kupfer, werden ohne Abriss mit umgeformt und dabei auf wenige µm Dicke ausgedünnt. Die Leitfähigkeit bleibt erhalten. Durch entsprechende Beschichtungen können die Korrosionsfestigkeit und die elektrische Leitfähigkeit der Fügeverbindungen weiter erhöht werden.

Die Kontaktplatte kann aus Kupfer, das gegebenenfalls mit einer Metallschicht versehen wird, oder aus Blech, das gegebenenfalls mit einer Metallschicht versehen wird, oder weiteren metallischen Materialien gefertigt werden. In allen Fällen wird eine optimale mechanische und elektrische Verbindung hergestellt, die bei konventionellen Lösungen, wie Schraubverbindungen oder Steckverbindungen nicht erreicht wird.

Zum Erstellen der Fügeverbindungen wird ein Handwerkzeug eingesetzt, welches z.B. von der TOX^{®} PRESSOTECHNIK GmbH & Co. KG, D-88250 Weingarten, oder der BTM COMPANY, LLC., Marysville, U.S.A., erhältlich ist. Handwerkzeuge können mit einem elektrischen, pneumatischen oder hydraulischen Antrieb versehen sein, mittels dessen die Werkzeugteile, der Stempel und die Matrize, gegeneinander geführt werden, um die Verbindungsplatte 20 und die Seitenwände 11A, 11B ineinander zu verformen.

Nachfolgend wird die Erfindung anhand von Zeichnungen näher erläutert. Dabei zeigt:
- Fig. 1a: zwei Kabelbahnabschnitte 1A, 1B einer Kabelbahn 1 und eine Verbindungsvorrichtung 2 mit einer Verbindungsplatte 20, mittels der die Kabelbahnabschnitte 1A, 1B nach einem ersten Ausführungsbeispiel miteinander verbunden werden;
- Fig. 1b: die mechanische Verbindung der Kabelbahnabschnitte 1A, 1B von Fig. 1a in einem ersten Arbeitsschritt durch die Verbindungsplatte 20, die mit einem Abschlussteil 22C in einen Wandabschluss 112 der Seitenwände 11A, 11B der Kabelbahnabschnitte 1A, 1B eingehängt wird;
- Fig. 1c: die Kabelbahnabschnitte 1A, 1B von Fig. 1b mit der nach unten gedrehten Verbindungsplatte 20 nach dem zweiten Arbeitsschritt, in dem die Verbindungsplatte 20 durch je zwei Fügeverbindungen 28A, 28B mit der ersten und der zweiten Seitenwand 11A, 11B verbunden wurde;
- Fig. 1d: die Kabelbahnabschnitte 1A, 1B der Kabelbahn 1 von Fig. 1b mit der eingehängten Verbindungsplatte 20, die nach unten gedreht wird;
- Fig. 1e: die Kabelbahnabschnitte 1A, 1B der Kabelbahn 1 von Fig. 1d mit der nach unten gedrehten Verbindungsplatte 20, die mit dem Abschnittteil 22C in den Wandabschlüssen 112 der Seitenwände 11A, 11B gehalten ist;
- Fig. 2: die zwei Kabelbahnabschnitte 1A, 1B der Kabelbahn 1 von Fig. 1a und eine Verbindungsvorrichtung 2 mit einer weiteren Verbindungsplatte 20, mittels der die Kabelbahnabschnitte 1A, 1B nach einem zweiten Ausführungsbeispiel miteinander verbunden werden;
- Fig. 3a: die zwei Kabelbahnabschnitte 1A, 1B der Kabelbahn 1 von Fig. 2 mit der Verbindungsvorrichtung 2 mit der Verbindungsplatte 20, die im ersten Arbeitsschritt montiert wurde und nun im zweiten Arbeitsschritt mit einem Fügewerkzeug 3 durch Fügeverbindungen 28A, 28B mit den zugehörigen Seitenwänden 11A, 11B der Kabelbahnabschnitte 1A, 1B formschlüssig und kraftschlüssig verbunden wird; und
- Fig. 3b: Stempel 321 und Matrize 311 des Fügewerkzeugs 3 von Fig. 3a.

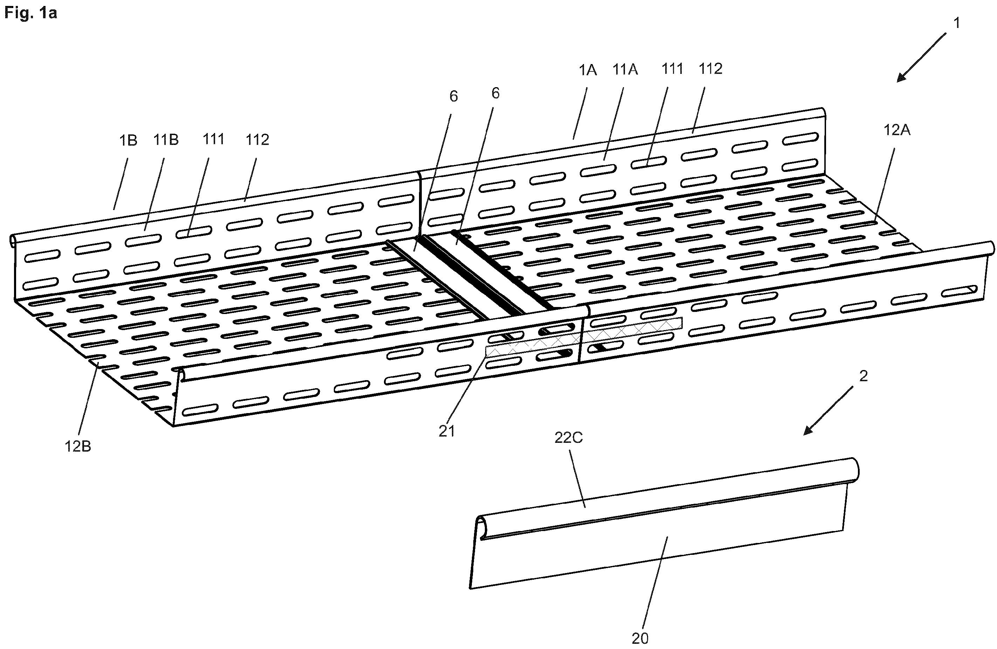

Fig. 1a zeigt eine Kabelbahn 1 in einer bevorzugten Ausgestaltung mit gleichen oder ungleichen Kabelbahnabschnitten 1A, 1B beliebiger Länge, die eine Bodenplatte 12A bzw. 12B und beidseits daran anschliessende Seitenwände 11A bzw. 11B aufweisen, die optional mit Längslochungen 111 und optional einem gerollten Wandabschluss 112 versehen sind. Die beiden Kabelbahnabschnitte 1A, 1B, die koaxial zueinander ausgerichtet sind und stirnseitig aneinander anstossen, weisen frontseitig an den Bodenplatten 12A, 12B je ein Pufferelement 6 auf, durch die ein kabelschonender Übergang gewährleistet wird. Die gezeigten Kabelbahnabschnitte 1A, 1B werden mit einer Verbindungsvorrichtung 2 nach dem erfindungsgemässen Verfahren miteinander verbunden. Die Verbindungsvorrichtung 2 kann in unterschiedlichen Ausgestaltungen vorliegen, weist aber stets eine Verbindungsplatte 20 auf, die in allen Ausgestaltungen der Erfindung an der Innenseite oder der Aussenseite der zugeordneten Seitenwände 11A; 11B montiert werden kann. Die Verbindungsvorrichtung 2 wird vorzugsweise unter Berücksichtigung der Ausgestaltung der Kabelbahnabschnitte 1A, 1B gewählt, die Seitenwände 11A, 11B mit oder ohne Wandabschluss 112 aufweisen können.

Die Verbindung der entsprechend positionierten Kabelbahnabschnitte 1A, 1B nach dem erfindungsgemässen Verfahren erfolgt in zwei wesentlichen Arbeitsschritten.

Im ersten Arbeitsschritt wird je eine Verbindungsplatte 20 auf jeder Seite der Kabelbahn 1 anhand wenigstens eines Haltemittels formschlüssig oder kraftschlüssig mit den zueinander korrespondierenden Seitenwänden 11A; 11B der Kabelbahnabschnitte 1A, 1B verbunden. Dabei können unterschiedliche Haltemittel individuell oder in Kombination eingesetzt werden.

In einem zweiten Arbeitsschritt werden die Verbindungsplatten 20 und die korrespondierenden Seitenwände 11A; 11B der beiden Kabelbahnabschnitte 1A, 1B je an wenigstens einer Stelle ineinander verformt und formschlüssig ineinander gefügt. Der zweite Arbeitsschritt erfolgt meist in gleicher Weise, wobei die Anzahl der Fügeverbindungen wahlweise vorgegeben wird. Vorzugsweise ist das Fügewerkzeug derart ausgestaltet, dass es auf die obere Kante oder den Wandabschluss 112 der Seitenwände 11A; 11B aufgelegt und betätigt werden kann, sodass die Fügeverbindungen stets auf derselben Höhe resultieren. Die Seitenwände 11A; 11B können für ein entsprechendes Fügewerkzeug daher als Lehre verwendet werden.

In der vorliegenden Ausgestaltung sind zwei verschiedene Haltemittel 21, 22 vorgesehen, die alternativ oder, wie im Ausführungsbeispiel, vorzugsweise in Kombination eingesetzt werden.

Auf die Seitenwände 11A; 11B wurde ein doppelseitiges Klebband 21 aufgetragen. Auf die sichtbare Klebeseite kann nun im ersten Arbeitsschritt die Verbindungsplatte 20 derart aufgetragen werden, dass sie beide Seitenwände 11A; 11B etwa zu gleichen Anteilen überdeckt. z.B. wird beidseits ein Bereich mit vier Lochungen überdeckt.

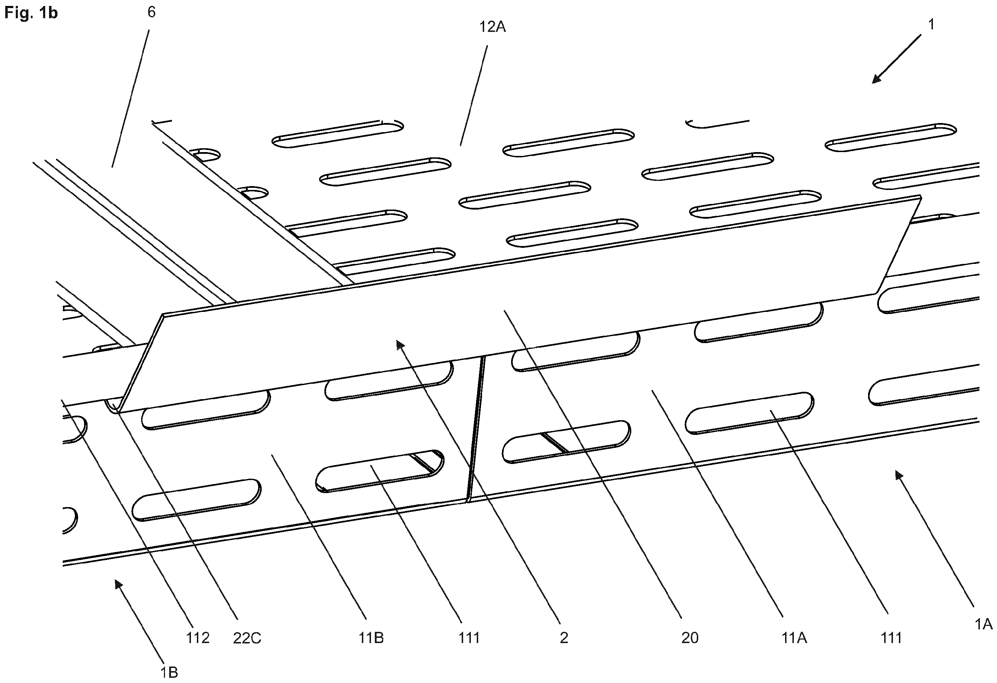

Alternativ oder zusätzlich ist die Verbindungsplatte 20 an der Oberseite mit einem gerollten, gerundeten oder gekrümmten Abschlussteil 22C versehen, das in den nach aussen gerollten Wandabschluss 112 der Seitenwände 11A; 11B eingesetzt werden kann. Der etwa kreisförmig nach aussen gerollte Wandabschluss 112 begrenzt eine Schlitzöffnung, in die das Abschlussteil 22C der Verbindungsplatte 20 nicht beliebig eingeführt werden kann, sondern stets eingedreht werden muss, wie dies in den Figuren 1b bis 1e illustriert ist. Wesentlich ist, dass der Querschnitt des Abschlussteils 22C etwas kleiner ist als der Querschnitt der Wandabschlüsse 112.

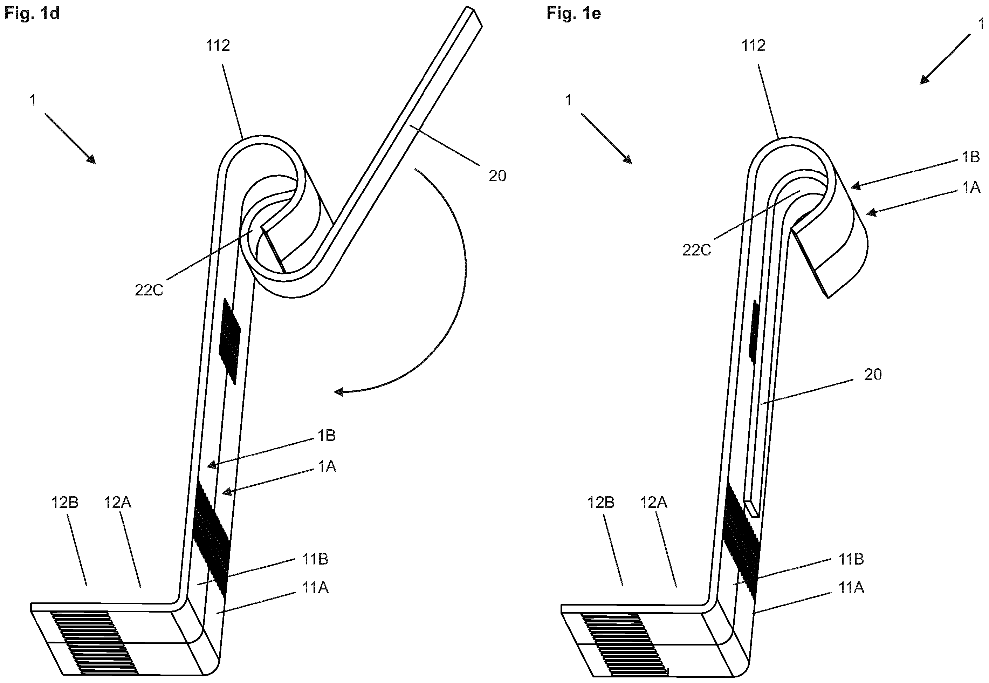

Fig. 1b und Fig. 1d zeigen, dass die Verbindungsplatte 20 für den Verbindungsvorgang nach oben ausgerichtet wird, sodass das Abschlussteil 22C in den Wandabschluss 112 der Seitenwände 11A; 11B eingeführt werden kann. Anschliessend wird die Verbindungsplatte 20 nach unten gegen die Seitenwände 11A; 11B gedreht und dort vom optional vorgesehenen Klebeband 21 (siehe Fig. 1a) gehalten.

Fig. 1e zeigt die Abschlussplatte 20 nach Abschluss des ersten Arbeitsschritts. Die das Abschlussteil 22C der Abschlussplatte 20 ist fest im Wandabschluss 112 der Seitenwände 11A; 11B verankert und hält diese koaxial zueinander ausgerichtet. Auch ohne das Klebeband 21 kann sich die Verbindungsplatte 20 nicht mehr selbsttätig aus dem Wandabschluss 112 lösen. Bereits nach dem ersten Arbeitsschritt ist daher eine stabile Verbindung erstellt.

Die Figuren 1d und 1e illustrieren, dass die Verbindungsplatte 20 mit einem Handgriff bzw. mit einer Drehung in einfacher Weise montiert werden kann.

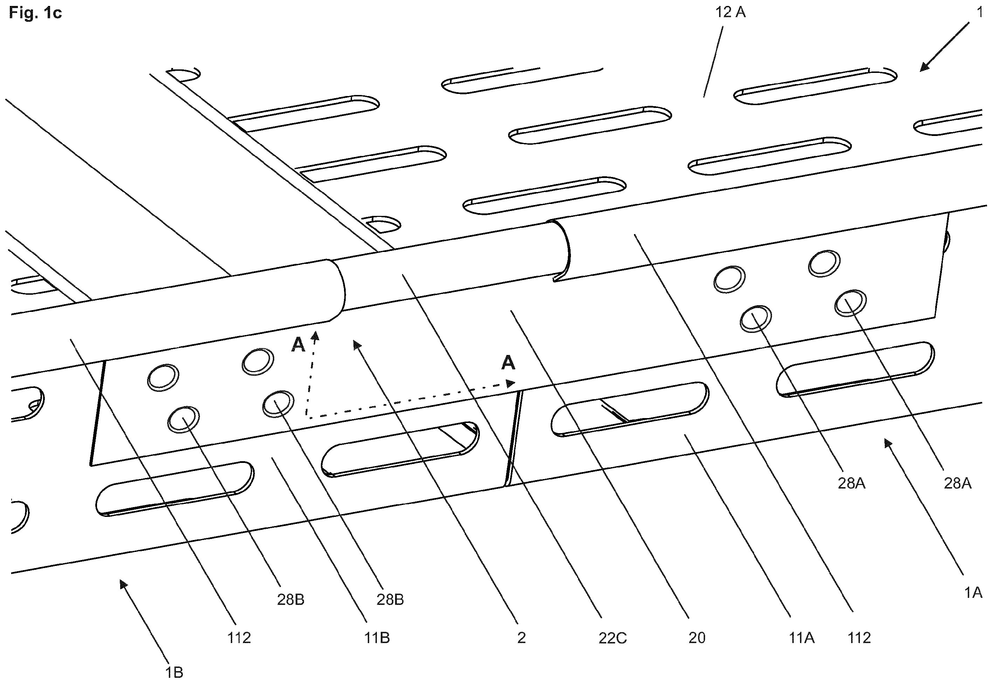

Fig. 1c zeigt die Kabelbahnabschnitte 1A, 1B von Fig. 1b und Fig. 1e mit der nach unten gedrehten Verbindungsplatte 20 nach dem zweiten Arbeitsschritt, in dem die Verbindungsplatte 20 beidseits durch je Fügeverbindungen 28A, 28B mit dem ersten und dem zweiten Kabelbahnabschnitt 1A, 1B verbunden wurde. Ein Teil des zweiten Kabelbahnabschnitts 1B wurde entlang der Linie A--A weggeschnitten, sodass das Abschlussteil 22C, das im Wandabschluss 112 der Seitenwände 11A; 11B formschlüssig gehalten ist, sichtbar ist.

Die Fügeverbindungen 28A, 28B sind druckknopfartig in die formschlüssig miteinander verbundenen Blechschichten eingefügt. Durch die Verbindungsplatte 20 und die Fügeverbindungen 28A, 28B erfolgt somit die gewünschte mechanische und elektrische Verbindung zwischen den Kabelbahnabschnitten 1A, 1B.

In der gezeigten Ausgestaltung sind vier Fügeverbindungen 28A, 28B vorgesehen. Entsprechend der Ausgestaltung und Verankerung der Verbindungsplatte 20 können beidseits eine oder mehrere Fügeverbindungen 28A, 28B vorgesehen werden. Durch zwei oder mehrere Fügeverbindungen 28A, 28B kann die Verbindung zwischen den Verbindungsplatten 20 und den Kabelbahnabschnitten 1A, 1B entsprechend verstärkt werden. Fügeverbindungen 28A, 28B können entlang einer Linie oder verteilt in einer Ebene z.B. an den Ecken eines Polygons, eines Rechtecks, eines Quadrats oder eines Parallelogramms vorgesehen werden.

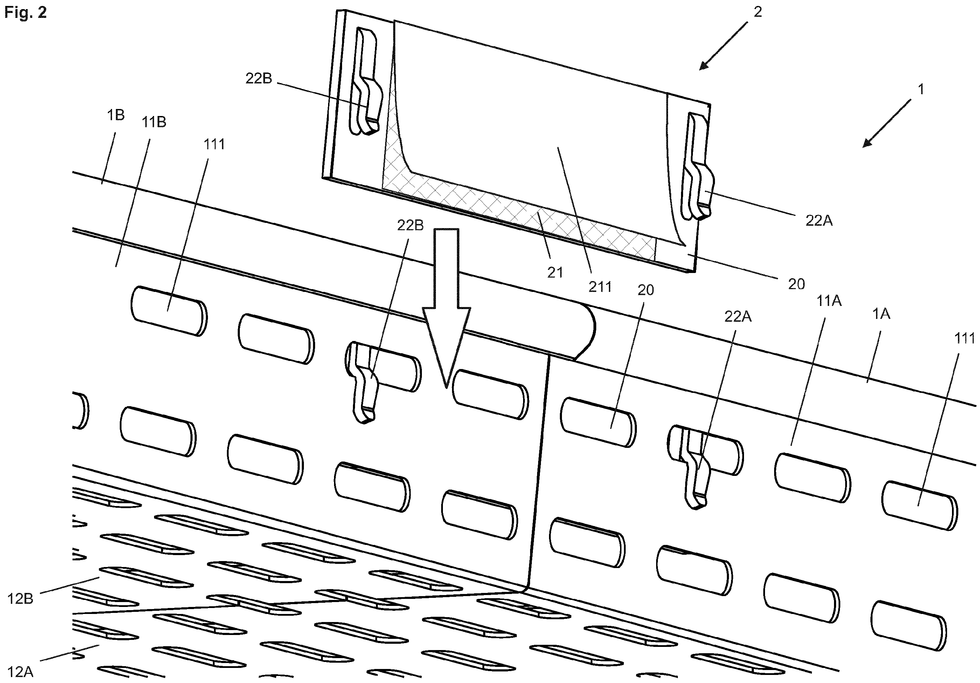

Fig. 2 zeigt die zwei Kabelbahnabschnitte 1A, 1B der Kabelbahn 1 von Fig. 1a und eine Verbindungsvorrichtung 2 mit einer Verbindungsplatte 20, mittels der die Kabelbahnabschnitte 1A, 1B nach einem zweiten Ausführungsbeispiel miteinander verbunden werden.

Die Verbindungsvorrichtung 2 weist wiederum Haltemittel auf, die alternativ oder in Kombination eingesetzt werden können.

Die Verbindungsplatte 20 weist beidseitig hakenförmige Halteelemente 22A, 22B auf, die in Öffnungen 111 der Seitenwände 11A; 11B der Kabelbahnabschnitte 1A, 1B eingesetzt werden können. Jede Verbindungsplatte 20 kann im ersten Arbeitsschritt in einfacher Weise mit den entsprechenden Seitenwänden 11A; 11B verbunden bzw. darin eingehängt werden. Die Halteelemente 22A, 22B sind vorzugsweise federelastisch ausgebildet und derart geformt, dass sie die Verbindungsplatte 20 elastisch gegen die Seitenwände 11A; 11B ziehen. Nach der Montage der Verbindungsplatte 20 kann der zweite Arbeitsschritt durchgeführt werden.

In der in Fig. 2 gezeigten Ausgestaltung ist die Verbindungsplatte 20 optional mit einem doppelseitigen Klebeband 21 versehen, dessen Klebstoffkörper bereits mit einer Klebstoffseite an der Verbindungsplatte 20 anliegt. Die andere Klebstoffseite ist noch mit einer Schutzfolie 211 abgedeckt, die nun entfernt wird, um die Klebstoffschicht freizulegen. Anschliessend wird die Verbindungsplatte 20 wie beschrieben montiert und in der Folge einerseits formschlüssig und kraftschlüssig von den Halteelementen 22A, 22B und andererseits kraftschlüssig vom Klebstoffkörper 21 bzw. einer Klebstoffschicht 21 gehalten. Der erste Arbeitsschritt ist wiederum abgeschlossen.

Die Halteelemente 22A, 22B und der Klebstoffkörper 21 können auch alternativ für sich allein vorgesehen werden.

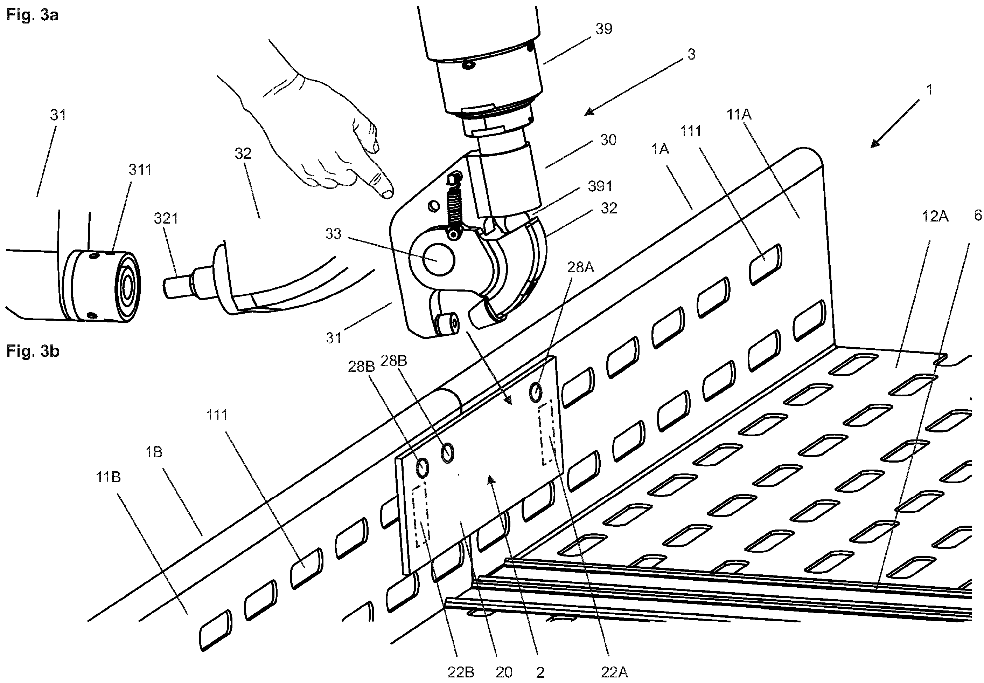

Die Verbindungsplatte 20 von Fig. 2 oder Fig. 3a kann auch als Permanentmagnet ausgebildet oder temporär mit Permanentmagneten versehen werden. Z.B. sind die Halteelemente 22A und 22B als Permanentmagnete ausgebildet.

Nach der Montage der Verbindungsplatte 20 wird diese nun im zweiten Arbeitsschritt anhand eines Fügewerkzeugs 3 durch Fügeverbindungen 28A, 28B mit den Seitenwänden 11A; 11B verbunden, wie dies in Fig. 3a gezeigt ist.

Fig. 3a zeigt die zwei Kabelbahnabschnitte 1A, 1B der Kabelbahn 1 von Fig. 2 mit der Verbindungsvorrichtung 2 mit der Verbindungsplatte 20, die im ersten Arbeitsschritt montiert wurde und nun im zweiten Arbeitsschritt mit einem Fügewerkzeug 3 durch Fügeverbindungen 28A, 28B mit den zugehörigen Seitenwänden 11A, 11B der Kabelbahnabschnitte 1A, 1B formschlüssig und kraftschlüssig verbunden wird. Es ist gezeigt, dass bereits drei Fügeverbindungen 28A, 28B, 28B eingefügt wurden und das Fügewerkzeug 3 zu einer weiteren Position geführt wird, an der eine weitere Fügeverbindung 28A eingefügt wird.

Das Fügewerkzeug 3 umfasst einen elektrischen, hydraulischen oder pneumatischen Antrieb 39, der einen Stössel 391 axial ausfahren und zurückfahren kann, und einen Werkzeugkopf 30, der zwei Klemmbacken 31, 32 umfasst, die durch eine Lagerwelle 33 drehbar miteinander verbunden sind. Die erste Klemmbacke 31 ist mit der Matrize 311 (siehe Fig. 3b) versehen und stationär gehalten. Die zweite Klemmbacke 32 ist mit dem Stempel 321 (siehe Fig. 3b) versehen und um die Lagerwelle 33 drehbar. Beim Ausfahren des Stössels 391 wird die zweite Klemmbacke 32 mit dem Stempel 321 gegen die Matrize 311 geführt und kann in diese eindringen, um die Fügeverbindung zu erstellen. Beim Zurückfahren des Stössels 391 wird die zweite Klemmbacke 32 von einer Feder zurückgezogen. Vorzugsweise werden die Klemmbacken 31, 32 derart dimensioniert, dass sie den gegebenenfalls vorhandenen Wandabschluss 112 umgreifen und anliegend an der Seitenwand die Fügeverbindungen 28A, 28B auf der gewünschten Höhe in die Verbindungsplatte 20 und die Seitenwände 11A, 11B eingearbeitet werden können. Das manuell bedienbare Fügewerkzeug 3 kann somit auf eine der Seitenwände 11A, 11B aufgelegt und seitlich zu den gewünschten Positionen gefahren werden, an denen die Fügeverbindungen 28A, 28B auf der gewünschten Höhe realisiert werden.

Fig. 3b zeigt den Stempel 321 und Matrize 311 des Fügewerkzeugs 3 von Fig. 3a, welches von Hand bedient werden kann.

## Patentansprüche

1. Verfahren zur Verbindung von Kabelbahnabschnitten (1A, 1B), die je wenigstens ein erstes bzw. zweites Bodenelement (12A; 12B) und beidseits daran anschliessende gegebenenfalls mit Lochungen (111) versehene Seitenwände (11A; 11B) umfassen und die nach deren Verbindung eine Kabelbahn (1) bilden, wobei eine Verbindungsvorrichtung (2), die eine metallene Verbindungsplatte (20) umfasst, und ein Haltemittel (21, 22) vorgesehen wird, mittels dessen die Verbindungsplatte (20) in einem ersten Arbeitsschritt formschlüssig oder kraftschlüssig mit zueinander korrespondierenden und stirnseitig aneinander anliegenden Seitenwänden (11A; 11B) der Kabelbahnabschnitte (1A, 1B) verbunden wird, **dadurch gekennzeichnet, dass** die Verbindungsplatte (20) und die Seitenwände (11A; 11B) der beiden Kabelbahnabschnitte (1A, 1B), die als Blechlagen aneinander liegen, in einem zweiten Arbeitsschritt je an wenigstens einer Stelle mittels eines Fügewerkzeugs durch einen Kaltumformprozess ineinander verformt und formschlüssig ineinander gefügt werden.

2. Verfahren nach Anspruch 1, **dadurch gekennzeichnet, dass** die Verbindungsplatte (20) und die Seitenwände (11A; 11B) im ersten Arbeitsschritt mittels des Haltemittels (21), eines Klebstoffs oder Klebstoffelements, miteinander verklebt werden, der zuerst auf die Verbindungsplatte (20) oder zuerst auf die Seitenwände (11A; 11B) aufgetragen wird.

3. Verfahren nach Anspruch 2, **dadurch gekennzeichnet, dass** die Verbindungsplatte (20) und die Seitenwände (11A; 11B) im ersten Arbeitsschritt durch das Haltemittel (21), ein doppelseitig klebendes Klebeband (21), miteinander verbunden werden, wobei das Klebeband (21) zuerst auf die Verbindungsplatte (20) oder zuerst auf die Seitenwände (11A; 11B) aufgetragen wird.

4. Verfahren nach Anspruch 3, **dadurch gekennzeichnet, dass** das doppelseitig klebende Klebeband (21) einen flächigen Klebstoffkörper (210) umfasst, der mit einer ersten Klebstoffseite an der Verbindungsplatte (20) und dessen zweite Klebstoffseite vor der Verbindung der Kabelbahnabschnitte (1A, 1B) mit einer Schutzfolie (211) abgedeckt ist, die für die Montage der Verbindungsplatte (20) entfernt wird.

5. Verfahren nach einem der Ansprüche 1-4, **dadurch gekennzeichnet, dass** die Verbindungsplatte (20) links und rechts einer Symmetrieachse mit als Haltemittel (22) dienenden Halteelementen (22A, 22B) versehen ist, die mit den Seitenwänden (11A; 11B) formschlüssig verbunden werden oder dass die Verbindungsplatte (20) durchgehend mit einem als Haltemittel (22) dienenden Halteelement (22C) versehen ist, das mit den Seitenwänden (11A; 11B) oder mit einem an die Seitenwände (11A; 11B) anschliessenden Wandabschluss (112) formschlüssig verbunden wird.

6. Verfahren nach Anspruch 5, **dadurch gekennzeichnet, dass** die Halteelemente (22A, 22B) als Haken ausgebildet sind, die in zugeordnete Lochungen (111) der Seitenwände (11A; 11B) eingehängt werden oder dass das durchgehende Halteelement (2C) als durchgehende Krümmung oder Faltung an der Oberseite der Verbindungsplatte (20) vorgesehen ist, die in den Wandabschluss (112) eingedreht oder eingehängt wird.

7. Verfahren nach Anspruch 5 oder 6, **dadurch gekennzeichnet, dass** die Halteelemente (22A, 22B) aus der Verbindungsplatte (20) ausgeschnitten und ausgeformt sind oder dass das durchgehende Halteelement (22C) an der Verbindungsplatte (20) umgeformt ist.

8. Verfahren nach Anspruch 5, 6 oder 7, **dadurch gekennzeichnet, dass** die Halteelemente (22A, 22B) in einem Abstand zueinander angeordnet sind, der gegebenenfalls dem Rasterabstand der Lochungen (111) der Seitenwände (11A; 11B) entspricht, die vorzugsweise Längslochungen sind, die sich parallel zur Längsachse der Seitenwände (11A; 11B) erstrecken.

9. Verfahren nach einem der Ansprüche 1 - 8, **dadurch gekennzeichnet, dass** das Haltemittel wenigstens ein magnetisches Element ist oder umfasst, das in die Verbindungsplatte (20) integriert ist oder das mit der Verbindungsplatte (20) permanent verbunden ist oder temporär verbunden wird.

10. Verfahren nach einem der Ansprüche 1-9, **dadurch gekennzeichnet, dass** die Verbindungsplatte (20) und die Seitenwände (11A; 11B) im zweiten Arbeitsschritt mittels eines Handwerkzeugs durch ein Tox-Verfahren oder Clinch-Verfahren verformt und formschlüssig ineinander gefügt werden, sodass formschlüssige Verbindungen zwischen der Verbindungsplatte (20) und den Seitenwänden (11A; 11B) resultieren.

11. Verfahren nach einem der Ansprüche 1-10, **dadurch gekennzeichnet, dass** die Verbindungsplatte (20) aus Kupfer oder Blech gefertigt und vorzugsweise mit einer Schutzschicht, wie einer Sendzimir-Schicht, versehen ist und/oder dass die Dicke der Verbindungsplatte (20) der Dicke der Seitenwände (11A; 11B) entspricht oder geringer ist.

12. Kabelbahn (1) umfassend wenigstens zwei Kabelbahnabschnitte (1A, 1B), deren zueinander korrespondierende Seitenwände (11A, 11B), die durch wenigstens ein Bodenelement (12A; 12B) miteinander verbunden sind, gemäss dem erfindungsgemässen Verfahren nach einem der Ansprüche 1 - 11 durch Verbindungsvorrichtungen (2) miteinander verbunden wurden, die je eine Verbindungsplatte (20) umfassen, die an der Innenseite oder der Aussenseite der zugehörigen Seitenwände (11A, 11B) angeordnet und durch mehrere Fügeverbindungen (28A, 28B) formschlüssig mit den Seitenwänden (11A, 11B) verbunden sind.

13. Kabelbahn (1) nach Anspruch 12, **dadurch gekennzeichnet, dass** die Verbindungsplatten (20) zusätzlich durch Haltemittel (21, 22), wie Klebstoff, Klebstoffelemente, und/oder in die Verbindungsplatten (20) integrierte oder daran angeordnete Magnetelemente, und/oder beidseitig an den Verbindungsplatten (20) vorgesehene Halteelemente (22A, 22B) und/oder ein durchgehendes Halteelement (22B), mit den zugehörigen Seitenwänden (11A, 11B) verbunden sind.

14. Kabelbahn (1) nach Anspruch 12 oder 13, **dadurch gekennzeichnet, dass** die beidseitig an der Verbindungsplatte (20) vorgesehenen Halteelemente (22A, 22B) als Haken ausgebildet sind, die in zugeordnete Lochungen (111) der Seitenwände (11A; 11B) eingehängt sind oder dass das durchgehende Halteelement (2C) als durchgehende Krümmung oder Faltung an der Oberseite der Verbindungsplatte (20) vorgesehen ist, die in den Wandabschluss (112) eingedreht oder eingehängt ist.

15. Kabelbahn (1) nach Anspruch 12, 13 oder 14, **dadurch gekennzeichnet, dass** die Fügeverbindungen (28A, 28B) Clinch-Verbindungen oder Tox-Verbindungen sind.

## Claims

1. Method for connecting cable tray sections (1A, 1B), each comprising at least a first respectively second base element (12A; 12B) and side walls (11A; 11B) adjoining thereto on both sides, which side walls (11A; 11B) are optionally provided with perforations (111), and which cable tray sections (1A, 1B), after connection, form a cable tray (1), wherein a connecting device (2), which comprises a metal connecting plate (20), and holding means (21, 22) are provided, by means of which holding means (21, 22) the connecting plate (20) is connected in a first working step form-fittingly or force-fittingly to side walls (11A; 11B) of the cable tray sections (1A, 1B) that are corresponding to one another, **characterised in that** the connecting plate (20) and the side walls (11A; 11B) of the two cable tray sections (1A, 1B), which lie against each other as sheet metal layers, are formed into one another and are joined together form-fittingly in a second working step at at least one point by means of a joining tool through a cold forming process.

2. Method according to claim 1, **characterised in that** the connecting plate (20) and the side walls (11A; 11B) are bonded together in the first working step by means of the holding means (21), an adhesive or an adhesive element, which is first applied to the connecting plate (20) or first applied to the side walls (11A; 11B).

3. Method according to claim 2, **characterised in that** the connecting plate (20) and the side walls (11A; 11B) are connected to each other in the first working step by the holding means (21), a double-sided adhesive tape (21), wherein the adhesive tape (21) is first applied to the connecting plate (20) or first to the side walls (11A; 11B) .

4. Method according to claim 3, **characterised in that** the double-sided adhesive tape (21) comprises a flat adhesive body (210) which is attached with a first adhesive side to the connecting plate (20) and whose second adhesive side is covered with a protective film (211) prior to the connection of the cable tray sections (1A, 1B) which protective film (211) is removed for mounting the connecting plate (20).

5. Method according to one of the claims 1-4, **characterised in that** the connecting plate (20) is provided on the left and right of a symmetry axis with holding elements (22A, 22B) serving as holding means (22), which are connected to the side walls (11A; 11B) or that the connecting plate (20) is provided end-to-end with a holding element (22C) serving as holding means (22), which is connected in a form-fitting manner to the side walls (11A; 11B) or to a wall terminal (112) adjoining the side walls (11A; 11B).

6. Method according to claim 5, **characterised in that** the holding elements (22A, 22B) are designed as hooks which can be hooked into corresponding holes (111) in the side walls (11A; 11B), or that the continuous holding element (2C) is provided as a continuous bend or fold on the upper side of the connecting plate (20), which is turned or hooked into the wall terminal (112).

7. Method according to claim 5 or 6, **characterised in that** the holding elements (22A, 22B) are cut out and formed from the connecting plate (20) or that the continuous holding element (22C) is formed on the connecting plate (20).

8. Method according to claim 5, 6 or 7, **characterised in that** the holding elements (22A, 22B) are arranged at a distance from one another which, optionally, corresponds to the grid spacing of the perforations (111) of the side walls (11A; 11B), which are preferably longitudinal perforations extending parallel to the longitudinal axis of the side walls (11A; 11B).

9. Method according to one of the claims 1 - 8, **characterised in that** the holding means is or comprises at least one magnetic element which is integrated into the connecting plate (20) or that is permanently connected to the connecting plate (20) or is temporarily connected to it.

10. Method according to one of the claims 1-9, **characterised in that** the connecting plate (20) and the side walls (11A; 11B) are deformed in the second working step by means of a hand tool using a Tox process or clinching process and are joined together form-fittingly, resulting in form-fitting connections between the connecting plate (20) and the side walls (11A; 11B).

11. Method according to one of the claims 1-10, **characterised in that** the connecting plate (20) is made of copper or sheet metal and is preferably provided with a protective layer, such as a Sendzimir layer, and/or that the thickness of the connecting plate (20) corresponds to or is less than the thickness of the side walls (11A; 11B).

12. Cable tray (1) comprising at least two cable tray sections (1A, 1B), whose corresponding side walls (11A, 11B), which are connected to each other by at least one base element (12A; 12B), have been connected to each other according to the inventive method as defined in one of the claims 1-11 by connecting devices (2), which each comprise a connecting plate (20, 20A), which are arranged on the inside or outside of the associated side walls (11A, 11B) and are connected to the side walls (11A, 11B) in a form-fitting manner by means of a plurality of joining connections (28A, 28B).

13. Cable tray (1) according to claim 12, **characterised in that** the connecting plate (20) is additionally connected by holding means (21, 22), such as adhesive, adhesive elements, and/or magnetic elements integrated into or arranged on the connecting plate (20), and/or holding elements (22A, 22B) provided on both sides of the connecting plate (20) and/or a continuous holding element (22B), connected to the associated side walls (11A, 11B).

14. Cable tray (1) according to claim 12 or 13, **characterised in that** the holding elements (22A, 22B) provided on both sides of the connecting plate (20) are designed as hooks which are hooked into corresponding perforations (111) in the side walls (11A; 11B), or that the continuous holding element (2C) is provided as a continuous bend or fold on the upper side of the connecting plate (20), which is turned or hooked into the wall terminal (112).

15. Cable tray (1) according to claim 12, 13 or 14, **characterised in that** the joints (28A, 28B) are clinch joints or Tox joints.

## Revendications

1. Procédé de raccordement de sections de chemin de câbles (1A, 1B) qui comprennent chacune au moins un premier respectivement deuxième élément de fond (12A ; 12B) et des parois latérales (11A ; 11B) raccordées de chaque côté à celui-ci et pourvues éventuellement de perforations (111), et lesquels sections de chemin de câbles (1A, 1B) forment un chemin de câbles (1) après leur raccordement, où un dispositif de raccordement (2) qui comprend une plaque de raccordement métallique (20), et un moyen de retenue (21, 22) est prévu, au moyen duquel la plaque de raccordement (20) est reliée, dans une première étape de travail, par complémentarité de forme ou par adhérence, à des parois latérales (11A ; 11B) des sections de chemin de câbles (1A, 1B), **caractérisé en ce que** la plaque de liaison (20) et les parois latérales (11A ; 11B) des deux sections de chemin de câbles (1A, 1B), qui sont juxtaposées sous forme de couches de tôle, sont déformées les unes dans les autres au cours d'une deuxième étape de travail, à au moins un endroit, à l'aide d'un outil d'assemblage, par un processus de formage à froid, et sont assemblées les unes dans les autres par complémentarité de forme.

2. Procédé selon la revendication 1, **caractérisé en ce que** la plaque de raccordement (20) et les parois latérales (11A ; 11B) sont collées les unes aux autres au moyen du moyen de retenue (21), d'un adhésif ou d'un élément adhésif, qui est d'abord appliqué sur la plaque de raccordement (20) ou d'abord sur les parois latérales (11A ; 11B).

3. Procédé selon la revendication 2, **caractérisé en ce que** la plaque de raccordement (20) et les parois latérales (11A ; 11B) sont reliées entre elles dans la première étape de travail par le moyen de retenue (21), un ruban adhésif double face (21), ledit ruban adhésif (21) étant d'abord appliqué sur la plaque de raccordement (20) ou d'abord sur les parois latérales (11A ; 11B).

4. Procédé selon la revendication 3, **caractérisé en ce que** le ruban adhésif double face (21) comprend un corps adhésif plat (210) dont une première face adhésive est collée sur la plaque de raccordement (20) et dont la deuxième face adhésive est recouverte d'un film protecteur (211) avant le raccordement des sections de chemin de câbles (1A, 1B) qui est retiré pour le montage de la plaque de raccordement (20).

5. Procédé selon une des revendications 1-4, **caractérisé en ce que** la plaque de raccordement (20) est pourvue, à gauche et à droite d'un axe de symétrie, d'éléments de retenue (22A, 22B) servant de moyens de retenue (22), qui sont reliés de manière complémentaire aux parois latérales (11A ; 11B) ou **en ce que** la plaque de raccordement (20) est pourvue de manière continue d'un élément de retenue (22C) servant de moyen de retenue (22), qui est relié par complémentarité de forme aux parois latérales (11A ; 11B) ou à une terminaison de paroi (112) adjacente aux parois latérales (11A ; 11B).

6. Procédé selon la revendication 5, **caractérisé en ce que** les éléments de retenue (22A, 22B) sont conçus comme des crochets qui peuvent être accrochés dans des perforations correspondantes (111) des parois latérales (11A ; 11B) ou **en ce que** l'élément de retenue continu (2C) est prévu sous la forme d'une courbure ou d'un pli continu sur la face supérieure de la plaque de raccordement (20), qui est vissée ou accrochée dans la terminaison de paroi (112).

7. Procédé selon la revendication 5 ou 6, **caractérisé en ce que** les éléments de retenue (22A, 22B) sont découpés et formés à partir de la plaque de raccordement (20) ou **en ce que** l'élément de retenue continu (22C) est formé à la plaque de raccordement (20).

8. Procédé selon la revendication 5, 6 ou 7, **caractérisé en ce que** les éléments de retenue (22A, 22B) sont disposés à une distance les uns des autres qui correspond éventuellement à l'espacement des perforations (111) des parois latérales (11A ; 11B), qui sont de préférence des perforations longitudinales s'étendant parallèlement à l'axe longitudinal des parois latérales (11A ; 11B).

9. Procédé selon une des revendications 1 - 8, **caractérisé en ce que** le moyen de retenue est ou comprend au moins un élément magnétique qui est intégré dans la plaque de raccordement (20) ou qui est relié de manière permanente ou temporaire à la plaque de raccordement (20).

10. Procédé selon une des revendications 1-9, **caractérisé en ce que** la plaque de raccordement (20) et les parois latérales (11A ; 11B) sont déformées dans une deuxième étape de travail à l'aide d'un outil à main par un procédé Tox ou un procédé de clinchage et sont assemblées par complémentarité de forme, de sorte qu'il en résulte des assemblages par complémentarité de forme entre la plaque de raccordement (20) et les parois latérales (11A ; 11B).

11. Procédé selon l'une des revendications 1 à 10, **caractérisé en ce que** la plaque de raccordement (20) est fabriquée en cuivre ou en tôle et est de préférence pourvue d'une couche protectrice, telle qu'une couche Sendzimir, et/ou **en ce que** l'épaisseur de la plaque de raccordement (20) correspond à l'épaisseur des parois latérales (11A ; 11B) ou est inférieure à celle-ci.

12. Chemin de câbles (1) comprenant au moins deux sections de chemin de câbles (1A, 1B) dont les parois latérales correspondantes (11A, 11B), qui sont reliées entre elles par au moins un élément de fond (12A ; 12B), ont été reliées entre elles selon le procédé selon une des revendications 1 à 11 par des dispositifs de liaison (2), qui comprennent chacun une plaque de raccordement (20) disposées sur le côté intérieur ou le côté extérieur des parois latérales associées (11A, 11B) et reliées par complémentarité de forme aux parois latérales (11A, 11B) par plusieurs abouchements (28A, 28B).

13. Chemin de câbles (1) selon la revendication 12, **caractérisé en ce que** les plaques de raccordement (20) sont en outre reliées par des moyens de retenue (21, 22), tels que des adhésifs, des éléments adhésifs et/ou des éléments magnétiques intégrés dans les plaques de raccordement (20) ou disposés sur celles-ci, et/ou des éléments de retenue (22A, 22B) prévus de chaque côté des plaques de raccordement (20) et/ou un élément de retenue continu (22B), aux parois latérales associées (11A, 11B).

14. Chemin de câbles (1) selon la revendication 12 ou 13, **caractérisé en ce que** les éléments de retenue (22A, 22B) prévus de chaque côté de la plaque de raccordement (20) sont conçus comme des crochets qui sont accrochés dans des perforations (111) correspondantes des parois latérales (11A ; 11B) ou **en ce que** l'élément de retenue continu (2C) est prévu sous la forme d'une courbure ou d'un pli continu sur la face supérieure de la plaque de raccordement (20), qui est tournée ou accrochée dans la terminaison de paroi (112).

15. Câble (1) selon la revendication 12, 13 ou 14, **caractérisé en ce que** les assemblages (28A, 28B) sont des assemblages par clinchage ou des joints Tox.
